# EUROPEAN PATENT SPECIFICATION

(11) **EP 2 397 782 B1**
(45) Date of publication and mention of the grant of the patent: **02.03.2016**
(21) Application number: 11158502.2
(22) Date of filing: 16.03.2011
(51) Int. Cl.: F24D 11/02, F24D 17/02, F24D 19/10

(54) **Hot water supply device associated with heat pump**
Mit einer Wärmepumpe assoziierte Heißwasserversorgungsvorrichtung
Dispositif d'alimentation en eau chaude associé à une pompe à chaleur

(30) Priority: 28.05.2010 KR 20100050322
(43) Date of publication of application: 21.12.2011
(73) Proprietor: LG Electronics Inc., Seoul 150-721 (KR)
(72) Inventor: Kim, Byungsoon, Changwon-si 641-711 (KR); Koo, Jahyung, Changwon-si 641-711 (KR); Kwon, Kyongmin, Changwon-si 641-711 (KR)
(74) Representative: Vossius & Partner Patentanwälte Rechtsanwälte mbB

(56) References cited:
- GB-A- 2 237 625
- JP-A- 2008 298 407
- KR-A- 20080 097 511
- KR-B1- 100 796 452

## Description

### BACKGROUND OF THE INVENTION

### 1. Field of the Invention

The present invention relates to a hot water supply device associated with a heat pump to supply hot water.

### 2. Description of the Related Art

In general, a hot water supply device uses a heating source to heat water and supply the heated water to a user. In this case, a device using a heat pump to heat water and supply the heated water to a user can be referred to as a hot water supply device associated with a heat pump.

The hot water supply device associated with the heat pump includes a water supply passage for supplying water, a water storage part for storing the water supplied through the water supply passage, a heating source for heating the supplied water, and a water discharge passage for supplying the heated water to a user.

The heat pump includes a compressor compressing a refrigerant, a condenser in which the refrigerant discharged from the compressor is condensed, an expander in which the refrigerant passing through the condenser is expanded, an evaporator in which the refrigerant expanded through the expander is evaporated, and a refrigerant pipe connecting the compressor, the condenser, the expander, and the evaporator to form a refrigerant cycle.

While the refrigerant flows in the heat pump, the refrigerant absorbs heat in the evaporator and emits heat in the condenser. The refrigerant transmits heat to the water in the hot water supply device, so that the hot water supply device can perform a hot water supply operation.

KR 2008 0097511 A relates to an air conditioning equipment according to the preamble of claim 1, using a cascade heat exchanger provided to use an enduring usable refrigerant without an exhaustion of a toxic gas and resources and to produce hot water which is possible for warming a floor while utilizing a cheap electricity.

GB 2 237 625 A relates to a heat pump system including such a condenser that permits to discharge a high-temperature fluid, by allowing a high temperature difference of the fluid at the inlet/outlet of the condenser.

### SUMMARY OF THE INVENTION

The present invention provides a hot water supply device associated with a heat pump, which can minimize degradation due to an outdoor condition variation and continuously perform a hot water supply operation and a heating operation without a defrosting operation. The hot water supply device associated with a heat pump and using the heat pump to perform a hot water supply operation is defined in claim 1. According to the present invention, degradation due to the variation in an outdoor condition such as outdoor temperature can be minimized and defrosting operation is unnecessary, and the hot water supply operation and the heating operation can be continuously performed.

### BRIEF DESCRIPTION OF THE DRAWINGS

Fig. 1 is a schematic view illustrating a hot water supply device associated with a heat pump, according to a first embodiment.
Fig. 2 is a block diagram illustrating a flow of a control signal of a hot water supply device associated with a heat pump, according to an embodiment.
Fig. 3 is a flowchart illustrating a control flow when a hot water supply device associated with a heat pump is in a freezing and bursting prevention operation, according to an embodiment.
Fig. 4 is a schematic view illustrating a circulation of heat source side water in a hot water supply device associated with a heat pump, according to an embodiment.
Fig. 5 is a flowchart illustrating a control flow when a hot water supply device associated with a heat pump is in a water saving operation, according to an embodiment.
Fig. 6 is a schematic view illustrating a hot water supply device associated with a heat pump, according to a second embodiment.
Fig. 7 is a schematic view illustrating a hot water supply device associated with a heat pump, according to a third embodiment.
Fig. 8 is a schematic view illustrating a hot water supply device associated with a heat pump, according to a fourth embodiment.
Fig. 9 is a schematic view illustrating a hot water supply device associated with a heat pump, according to a fifth embodiment.
Fig. 10 is a schematic view illustrating a hot water supply device associated with a heat pump, according to a sixth embodiment.
Fig. 11 is a schematic view illustrating a hot water supply device associated with a heat pump, according to a seventh embodiment.
Fig. 12 is a schematic view illustrating a hot water supply device associated with a heat pump, according to an eighth embodiment.

### DETAILED DESCRIPTION OF THE EMBODIMENTS

Reference will now be made in detail to the embodiments of the present disclosure, examples of which are illustrated in the accompanying drawings.

In the following detailed description of the preferred embodiments, reference is made to the accompanying drawings that form a part hereof, and in which is shown by way of illustration specific preferred embodiments in which the invention may be practiced. These embodiments are described in sufficient detail to enable those skilled in the art to practice the invention, and it is understood that other embodiments may be utilized and that logical structural, mechanical, electrical, and chemical changes may be made without departing from the spirit or scope of the invention. To avoid detail not necessary to enable those skilled in the art to practice the invention, the description may omit certain information known to those skilled in the art. The following detailed description is, therefore, not to be taken in a limiting sense, and the scope of the present invention is defined only by the appended claims.

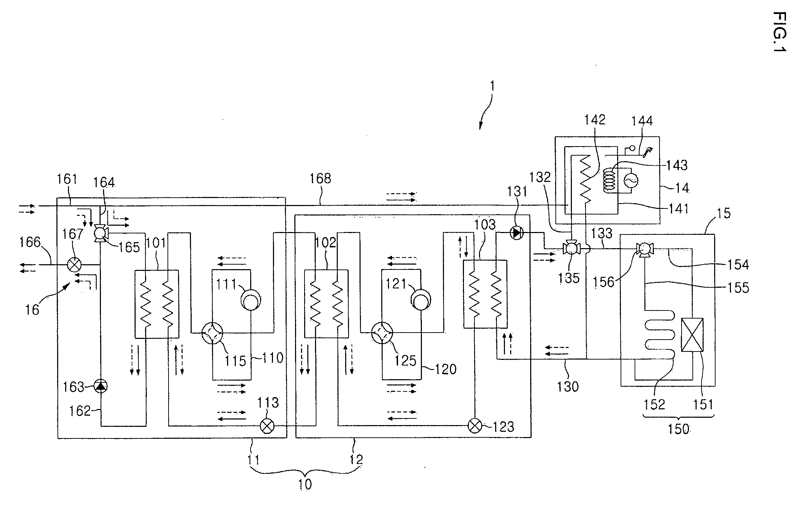

Fig. 1 is a schematic view illustrating a hot water supply device associated with a heat pump, according to a first embodiment.

Referring to Fig. 1, a hot water supply device 1 associated with a heat pump includes a cascade heat pump 10 including a first refrigerant circulation part 11 forming a first refrigerant cycle and a second refrigerant circulation part 12 forming a second refrigerant cycle to form a two-stage refrigerant cycle, and a hot water supply part 14 using the cascade heat pump 10 to supply hot water.

In detail, the first refrigerant circulation part 11 includes a first compressor 111 compressing a first refrigerant, a cascade heat exchanger 102 exchanging heat between the first refrigerant and a second refrigerant, a first expander 113 expanding the first refrigerant, and a heat source side heat exchanger 101 configured such that the first refrigerant absorbs and emits heat from and to a heat source.

The second refrigerant circulation part 12 includes a second compressor 121 compressing the second refrigerant, a usage side heat exchanger 103 using the second refrigerant to perform at least one of a hot water supply operation and a heating/cooling operation, and a second expander 123 expanding the second refrigerant, and the cascade heat exchanger 102. That is, the cascade heat exchanger 102 is simultaneously included in the first and second refrigerant circulation parts 11 and 12 for heat exchange of the first and second refrigerants.

The heat source is an object from and to which refrigerant absorbs and emits heat and denotes water in a water supply part 16 to be described later.

The usage side heat exchanger 103, the cascade heat exchanger 102, and the heat source side heat exchanger 101 may function as condensers or evaporators according to operation conditions. In detail, in a heating operation, the usage side heat exchanger 103 may be used as a condenser for the second refrigerant, and the cascade heat exchanger 102 may be used as a condenser for the first refrigerant and an evaporator for the second refrigerant, and the heat source side heat exchanger 101 may be used as an evaporator for the first refrigerant. In detail, in a cooling operation, the usage side heat exchanger 103 may be used as an evaporator for the second refrigerant, and the cascade heat exchanger 102 may be used as an evaporator for the first refrigerant and a condenser for the second refrigerant, and the heat source side heat exchanger 101 may be used as an condenser for the first refrigerant.

The first refrigerant circulation part 11 further includes a first flow switch part 115 switching a flow direction of the first refrigerant discharged from the first compressor 111 to one of the cascade heat exchanger 102 and the heat source side heat exchanger 101, and a first refrigerant pipe 110 connecting the first compressor 111, the first flow switch part 115, the cascade heat exchanger 102, the first expander 113, and the heat source side heat exchanger 101. The second refrigerant circulation part 12 further includes a second flow switch part 125 switching a flow direction of the second refrigerant discharged from the second compressor 121 to one of the cascade heat exchanger 102 and the usage side heat exchanger 103, and a second refrigerant pipe 120 connecting the second compressor 121, the second flow switch part 125, the cascade heat exchanger 102, the second expander 123, and the usage side heat exchanger 103.

The first and second refrigerants respectively flowing through the heat source side heat exchanger 101 and the usage side heat exchanger 103 are heat-exchanged with water. That is, heat is exchanged between refrigerant and water at both the heat source side heat exchanger 101 and the usage side heat exchanger 103. The heat source side heat exchanger 101 is provided as a water refrigerant heat exchanger exchanging heat between the first refrigerant and water, and the usage side heat exchanger 103 is provided as a water refrigerant heat exchanger exchanging heat between the second refrigerant and water. Thus, since a defrosting operation of the heat exchangers 101 and 103 is not required, the hot water supply operation and the heating operation can be continuously performed.

The hot water supply device 1 further includes a water pipe 130 in which water heat-exchanged with the second refrigerant in the usage side heat exchanger 103 flows, a usage side pump 131 forcibly moving the water in the water pipe 130, the hot water supply part 14 using the water heated by the second refrigerant in the usage side heat exchanger 103 to supply the heated water, and an heating/cooling part 15 using the water heat-exchanged with the second refrigerant in the usage side heat exchanger 103 to perform a heating/cooling operation.

In detail, the water pipe 130 is connected to the usage side heat exchanger 103 to move water heat-exchanged with the second refrigerant in the usage side heat exchanger 103. The water pipe 130 forms a closed loop circuit such that water heat-exchanged with the second refrigerant in the usage side heat exchanger 103 returns to the usage side heat exchanger 103 through the hot water supply part 14 or the heating/cooling part 15. That is, water passing through the usage side heat exchanger 103 circulates to pass through the hot water supply part 14 or the heating/cooling part 15 along the water pipe 130. The usage side pump 131 is installed on a side of the water pipe 130 to forcibly move water in the water pipe 130.

The hot water supply part 14 heats and supplies water, e.g., for face-washing or dish-washing. In detail, the hot water supply part 14 includes a hot water supply tank 141 storing water supplied from the outside and heating the stored water, a hot water supply heat exchanger 142 exchanging heat between water passing through the usage side heat exchanger 103 and water of the hot water supply tank 141, an auxiliary heater 143 disposed in the hot water supply tank 141, and a water discharge passage 144 supplying hot water from the hot water supply tank 141 to a user.

The hot water supply heat exchanger 142 may be configured in any shape provided that water of the hot water supply tank 141 can be heated by water flowing in the water pipe 130, for example, at least one portion of the water pipe 130 may be accommodated in the hot water supply tank 141.

The heating/cooling part 15 includes an indoor heat exchanger 150 that is adjacent to an indoor space to exchange heat between the second refrigerant and the indoor space. In more detail, the indoor heat exchanger 150 includes an air-conditioning heat exchanger 151 in which heat is exchanged between indoor air and the second refrigerant, and a bottom heat exchanger 152 in which heat is exchanged between an indoor bottom and the second refrigerant.

The air-conditioning heat exchanger 151 may be any device such as a fan coil unit in which heat can be exchanged between water and indoor air. The bottom heat exchanger 152 may be configured in any shape provided that heat can be exchanged between water and the indoor bottom, for example, at least one portion of the water pipe 130 is installed in the indoor bottom.

The hot water supply part 14 may be connected to the heating/cooling part 15 in parallel on the water pipe 130. In more detail, the water pipe 130 includes a hot water supply pipe 132 branched from a discharge side of the usage side heat exchanger 103 and joining an introduction side of the usage side heat exchanger 103, and a heating/cooling water pipe 133. The hot water supply part 14 is installed on the hot water supply pipe 132, and the heating/cooling part 15 is installed on the heating/cooling water pipe 133. A point of the water pipe 130 from which the hot water supply pipe 132 and the heating/cooling water pipe 133 are branched may be provided with an usage side three-way valve 135 switching a flow direction of water such that water passing through the usage side heat exchanger 103 is selectively introduced to one of the hot water supply part 14 and the heating/cooling part 15.

The air-conditioning heat exchanger 151 may be connected to the bottom heat exchanger 152 in parallel on the water pipe 130. In more detail, the heating/cooling water pipe 133 includes an air-conditioning water pipe 154 and a bottom water pipe 155, which are branched from each other. The air-conditioning heat exchanger 151 is installed on the air-conditioning water pipe 154, and the bottom heat exchanger 152 is installed in the bottom water pipe 155. A point of the heating/cooling water pipe 133 where the air-conditioning water pipe 154 and the bottom water pipe 155 are branched from each other may be provided with a heating/cooling side three-way valve 156 switching a flow direction of water such that water introduced into the bottom water pipe 155 is selectively introduced to one of the air-conditioning heat exchanger 151 and the bottom heat exchanger 152.

The hot water supply device 1 further includes the water supply part 16 in which water to be heat-exchanged with the first refrigerant in the heat source side heat exchanger 101 flows. The water supply part 16 includes a water supply passage 161 connected to a water supply source, a circulation passage 162 in which water to be heat-exchanged with the refrigerant in the heat source side heat exchanger 101 circulates, a circulation side pump 163 forcibly moving water in the circulation passage 162, a circulation side supply passage 164 supplying water to the circulation passage 162, a water supply adjustment part 165 selectively preventing a water supply through the circulation side supply passage 164, a circulation side discharge passage 166 discharging water circulating in the circulation passage 162, and a water discharge adjustment part 167 selectively preventing a water discharge through the circulation side discharge passage 166. Since the heat source side heat exchanger 101 is simultaneously connected to the circulation passage 162 and the first refrigerant pipe 110, heat is exchanged in the heat source side heat exchanger 101 between water flowing in the circulation passage 162 and the first refrigerant flowing in the first refrigerant pipe 110.

The water supply passage 161 is connected to a water supply source capable of continually supplying water, such as a water-supply facility. The circulation side supply passage 164 connects the water supply passage 161 to the circulation passage 162 to supply water from the water supply source to the circulation passage 162. The water supply adjustment part 165 is installed on the circulation side supply passage 164 to selectively prevent a water supply to the circulation passage 162.

The circulation side discharge passage 166 is branched from a side of the circulation passage 162 to guide water flowing in the circulation passage 162 to the outside. The water discharge adjustment part 167 is installed on the circulation side discharge passage 166 to selectively prevent a water discharge from the circulation passage 162 to the outside. The circulation side pump 163 is installed on a side of the circulation passage 162 to forcibly circulate water in the circulation passage 162.

The hot water supply device 1 further includes a hot water supply side supply passage 168 to supply water to the hot water supply part 14. The hot water supply side supply passage 168 connects the water supply passage 161 to the hot water supply part 14 to supply water from the water supply source to the hot water supply part 14. In more detail, the hot water supply side supply passage 168 connects the water supply passage 161 to the hot water supply tank 141 to guide water from the water supply source to the hot water supply tank 141 through the water supply passage 161 and the hot water supply side supply passage 168.

Since the circulation side supply passage 164 and the hot water supply side supply passage 168 are simultaneously connected to the water supply passage 161 and the water supply source, water can be simultaneously supplied from the water supply source to the circulation passage 162 and the hot water supply part 14 through the circulation side supply passage 164 and the hot water supply side supply passage 168. That is, water flowing in the circulation passage 162 and water stored and heated in the hot water supply part 14 are supplied from the same water supply source. Thus, the structure of the hot water supply device 1 can be further simplified.

Hereinafter, flows of water and refrigerant in a hot water supply device associated with a heat pump will be described in detail with reference to the accompanying drawings, according to the present disclosure.

Referring to Fig. 1, when the hot water supply device 1 is in a hot water supply or heating operation, the first refrigerant discharged from the first compressor 111 is introduced to the cascade heat exchanger 102. The first refrigerant passing through the cascade heat exchanger 102 heats the second refrigerant and is condensed. The first refrigerant going out of the cascade heat exchanger 102 is expanded through the first expander 113, and then, is introduced into the heat source side heat exchanger 101. The first refrigerant introduced to the heat source side heat exchanger 101 absorbs heat from water in the heat source, and is evaporated. The first refrigerant going out of the heat source side heat exchanger 101 is introduced again to the first compressor 111. At this point, the first flow switch part 115 communicates the first refrigerant pipe 110 at the discharge side of the first compressor 111 with the first refrigerant pipe 110 at the introduction side of the cascade heat exchanger 102, and maintains a communication state of the first refrigerant pipe 110 at the discharge side of the heat source side heat exchanger 101 with the first refrigerant pipe 110 at the introduction side of the first compressor 111.

The second refrigerant discharged from the second compressor 121 is introduced to the usage side heat exchanger 103. The second refrigerant passing through the usage side heat exchanger 103 heats water at the usage side and is condensed. The second refrigerant discharged from the usage side heat exchanger 103 is expanded through the second expander 123, and then, is introduced into the cascade heat exchanger 102. The second refrigerant introduced to the cascade heat exchanger 102 absorbs heat from the first refrigerant, and is evaporated. The second refrigerant discharged from the cascade heat exchanger 102 is introduced again to the second compressor 121. At this point, the second flow switch part 125 communicates the second refrigerant pipe 120 at the discharge side of the second compressor 121 with the second refrigerant pipe 120 at the introduction side of the usage side heat exchanger 103, and maintains a communication state of the second refrigerant pipe 120 at the discharge side of the cascade heat exchanger 102 with the second refrigerant pipe 120 at the introduction side of the second compressor 121.

Next, water discharged from the usage side pump 131 can be introduced to the hot water supply part 14 or the heating/cooling part 15. At this point, the usage side three-way valve 135 introduces the water to the hot water supply part 14 in the hot water supply operation, and introduces the water to the heating/cooling part 15 in the heating operation.

Water introduced to the hot water supply part 14 flows in the hot water supply heat exchanger 142 along the water pipe 130 at the hot water supply side and heats water stored in the hot water supply tank 141, and then, is discharged from the hot water supply part 14. The water discharged from the hot water supply part 14 passes through the usage side heat exchanger 103 along the water pipe 130 at the usage side and is heated to a high temperature by the refrigerant, and then, is introduced again to the usage side pump 131, and thus, the water can continuously circulate.

The water introduced to the heating/cooling part 15 is introduced along the heating/cooling water pipe 133 to the indoor heat exchanger 150. In more detail, the water introduced to the heating/cooling part 15 can be selectively introduced to one of the air-conditioning heat exchanger 151 and the bottom heat exchanger 152 by the heating/cooling side three-way valve 156. The water introduced to the air-conditioning heat exchanger 151 heats indoor air, and the water introduced to the bottom heat exchanger 152 heats the indoor bottom. The water passing through one of the air-conditioning heat exchanger 151 and the bottom heat exchanger 152 is introduced to the usage side heat exchanger 103 along the water pipe 130 at the usage side. The water passing through the usage side heat exchanger 103 is heated by the refrigerant, and then, is introduced again to the usage side pump 131, and thus, the water can continuously circulate. Water from the water supply source is introduced through the water supply passage 161 and the circulation side supply passage 164 to the circulation passage 162. At this point, the water supply adjustment part 165 maintains the communication state of the circulation side supply passage 164 with the circulation passage 162. The water introduced to the circulation passage 162 passes through the heat source side heat exchanger 101 and heats the refrigerant, and then, is discharged through the circulation side pump 163 and the circulation side discharge passage 166 to the outside.

At this point, the water at the heat source side is forcibly circulated by the circulation side pump 163. However, for example, when the water supply source such as a water supply facility has its own pressure, the pressure of the water supply source without the circulation side pump 163 may move the water in the circulation passage 162.

However, a freezing and bursting prevention operation and a water saving operation may be performed during a heating or cooling operation as described later. When at least one of the freezing and bursting prevention operation and the water saving operation is performed, water may flow in the circulation passage 162 along the circulation passage 162 in the state where a water supply and a water discharge from the circulation passage 162 is prevented. In this case, the circulation side pump 163 is necessary.

When the hot water supply device 1 is in the cooling operation, a flow direction of the refrigerant is changed. In more detail, the first refrigerant discharged from the first compressor 111 moves sequentially through the cascade heat exchanger 102, the first expander 113, and the heat source side heat exchanger 101, and then, is introduced again to the first compressor 111. The second refrigerant discharged from the second compressor 121 moves sequentially through the usage side heat exchanger 103, the second expander 123, and the cascade heat exchanger 102, and then, is introduced again to the second compressor 121. The water flow at the heat source side is the same as that in the heating operation, and the water at the usage side circulates through the heating/cooling part 15 and the usage side heat exchanger 103. The hot water supply device 1 may perform only both the heating operation and the hot water supply operation.

The hot water supply device 1 can improve installation characteristics since the refrigerants passing through the heat source side heat exchanger 101 and the usage side heat exchanger 103 are heat-exchanged with water.

In more detail, both the heat source side heat exchanger 101 and the usage side heat exchanger 103 are provided as water refrigerant heat exchangers in which heat is exchanged between water and the refrigerants. In general, since a heat exchange density between water and refrigerant is higher than a heat exchange density between air and refrigerant, the volume of a water refrigerant heat exchanger may be smaller than the volume of air refrigerant heat exchanger for the same heat exchange capacity. Therefore, the water refrigerant heat exchanger takes a relatively small installation space, and thus, can be installed in a relatively small space. Thus, the installation space of the hot water supply device 1 can be minimized.

In addition, the water refrigerant heat exchanger can be installed in indoor and outdoor spaces. Thus, the heat source side heat exchanger 101 and the usage side heat exchanger 103 can be installed in any space.

Thus, the installation characteristics of the hot water supply device 1 can be improved.

In addition, the hot water supply device 1 can minimize degradation due to an outdoor condition variation. In more detail, since water has a higher specific heat than air, water is relatively small affected by outdoor temperature. Thus, heat source side water, that is, circulation water is less in temperature variation than outside air. Thus, degradation due to the variation in an outdoor condition such as the outdoor temperature can be minimized.

In addition, in both the heat source side heat exchanger 101 and the usage side heat exchanger 103, heat is exchanged between water and refrigerant, and thus, frost is prevented from forming on the surfaces of the heat source side heat exchanger 101 and the usage side heat exchanger 103. Thus, a defrosting operation is unnecessary, and the hot water supply operation and the heating operation can be continuously performed.

Since the heat pump 10 uses a two-stage refrigerant cycle, that is, a cascade method, a hot water supply performance and a heating performance can be further improved. In more detail, a refrigerant temperature at a condensation end in a two-stage refrigerant cycle is higher than a refrigerant temperature at a condensation end in a single-stage refrigerant cycle. Thus, the hot water supply operation using the condensation end in the two-stage refrigerant cycle can have a higher hot water supply performance than the hot water supply operation using the condensation end in the single-stage refrigerant cycle.

Furthermore, since a fan for forcibly moving outdoor air is unnecessary, a noise can be further reduced during an operation.

Hereinafter, a freezing and bursting prevention operation and a water saving operation of a hot water supply device associated with a heat pump will be described in detail with reference to the accompanying drawings, according to the present disclosure.

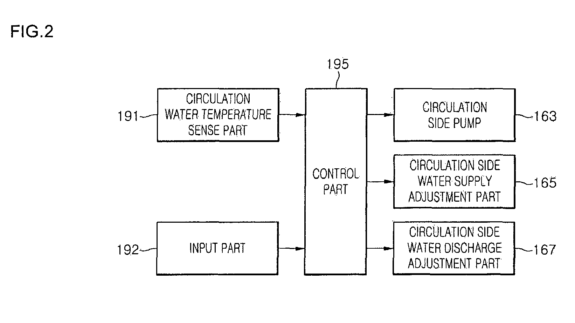

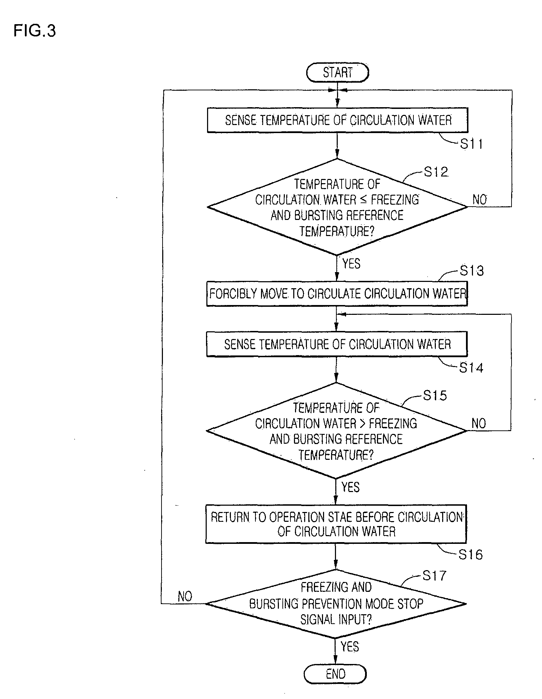

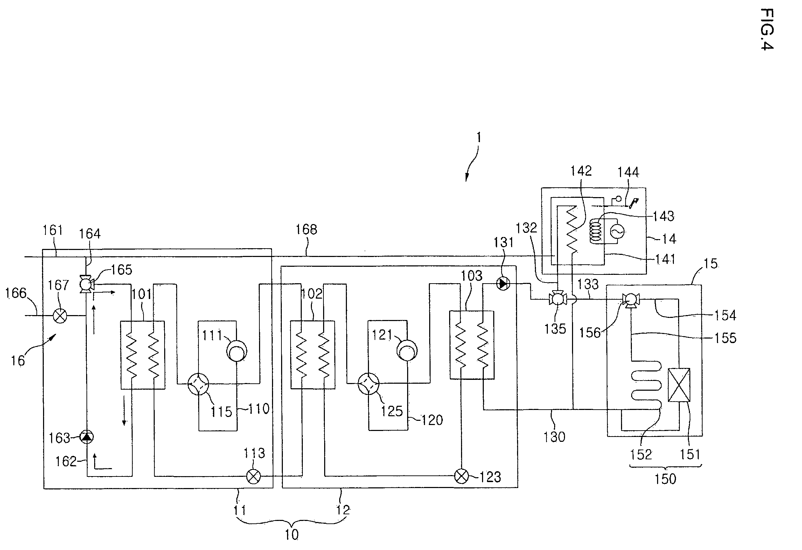

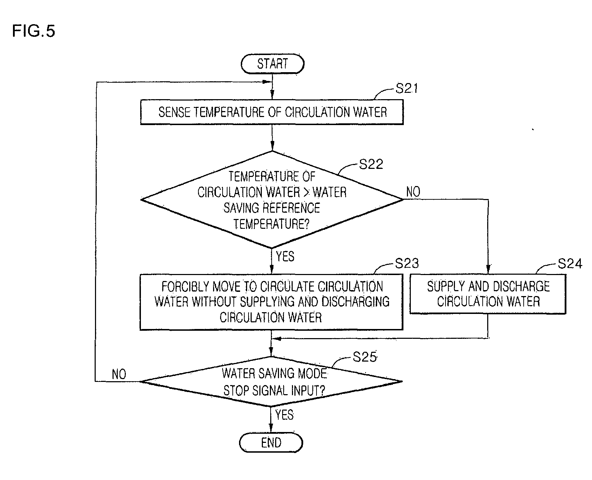

Fig. 2 is a block diagram illustrating a flow of a control signal of a hot water supply device associated with a heat pump, according to an embodiment, and Fig. 3 is a flowchart illustrating a control flow when a hot water supply device associated with a heat pump is in a freezing and bursting prevention operation, according to an embodiment. Fig. 4 is a schematic view illustrating a circulation of heat source side water in a hot water supply device associated with a heat pump, according to an embodiment, and Fig. 5 is a flowchart illustrating a control flow when a hot water supply device associated with a heat pump is in a water saving operation, according to an embodiment.

Referring to Fig. 2, the hot water supply device 1 further includes a circulation water temperature sense part 191 for sensing the temperature of heat source side water, that is, the temperature of circulation water, an input part 192 for inputting various signals for an operation control, and a control part 195 controlling the operation of the circulation side pump 163, the operation of the water supply adjustment part 165 at the circulation side, and the operation of the water discharge adjustment part 167 at the circulation side according to a temperature sensed by the circulation water temperature sense part 191 or a signal input by the input part 192. The circulation water temperature sense part 191, the input part 192, the control part 195, the circulation side pump 163, the water supply adjustment part 165, and the water discharge adjustment part 167 are electrically connected to one another to transmit and receive control signals.

The circulation water temperature sense part 191 may be installed at a side on the circulation passage 162 to sense the temperature of water flowing in the circulation passage 162. The input part 192 may be provided, for example, to the heating/cooling part 15, a side of the hot water supply part 14, or a remote control such that a user can easily input a signal.

Referring to Fig. 3, when the hot water supply device 1 is in the freezing and bursting prevention operation, the temperature of the circulation water is sensed first in operation S11. At this point, the temperature of the circulation water can be sensed by the circulation water temperature sense part 191.

Next, if the temperature of the circulation water is greater than a freezing and bursting reference temperature in operation S12, the process in which the temperature of the circulation water is sensed in operation S11 and is compared with the freezing and bursting reference temperature is repeated.

However, if the temperature of the circulation water is equal to or less than the freezing and bursting reference temperature in operation S12, the circulation water is forcibly moved to circulate through the circulation passage 162. At this point, the circulation water can be forcibly moved by the circulation side pump 163. The freezing and bursting reference temperature denotes a threshold temperature at which circulation water may be frozen. For example, the freezing and bursting reference temperature may be 0°C.

Referring to Fig. 4, the circulation water circulates through the circulation passage 162. First, water discharged from the circulation side pump 163 flows along the circulation passage 162 and is introduced to the source side heat exchanger 101. Then, the circulation water passing through the source side heat exchanger 101 heats the refrigerant, and then, is introduced again to the circulation side pump 163, and thus, the water can continuously circulate along the circulation passage 162.

The water discharge adjustment part 167 closes the circulation side discharge passage 166 to prevent the water discharge of the circulation passage 162, and the water supply adjustment part 165 closes the circulation side supply passage 164 to prevent the water supply of the circulation passage 162. Thus, the circulation water circulates in a closed loop along the circulation passage 162. Thus, even when the temperature of the circulation water is equal to or less than the freezing and bursting reference temperature, freezing of the circulation water can be minimized and delayed.

Next, the temperature of the circulation water is sensed again in operation S14. Then, if the temperature of the circulation water is equal to or less than the freezing and bursting reference temperature in operation S15, the process in which the temperature of the circulation water is sensed in operation S14 and is compared with the freezing and bursting reference temperature is repeated.

However, if the temperature of the circulation water is greater than the freezing and bursting reference temperature in operation S15, a state before the circulation of the circulation water returns in operation S14. For example, if the hot water supply device 1 is stopped before the circulation water circulates to prevent freezing and bursting, when the temperature of the circulation water after the circulation water circulates is over the freezing and bursting reference temperature, the state where the hot water supply device 1 is stopped returns.

After the state before the circulation of the circulation water returns, the temperature of the circulation water is sensed in operation S11 until a signal for stopping the freezing and bursting prevention operation is input in operation S17.

Referring to Fig. 5, when the hot water supply device 1 is in the water saving operation, the temperature of the circulation water is sensed first in operation S21.

Then, if the temperature of the circulation water is over a water saving reference temperature in operation S22, the circulation water circulates through the circulation passage 162 in the state where a supply and a discharge of the circulation water is prevented in operation S23.

At this point, the water saving reference temperature denotes the minimum temperature value of the circulation water within a range where a heating performance and a hot water supply performance can be satisfied. In more detail, when the hot water supply device 1 is in the heating and hot water supply operations, the circulation water heats the refrigerant through the usage side heat exchanger 103, and thus, the temperature of the circulation water continually decreases. Then, the temperature difference between the refrigerant and the circulation water passing through the usage side heat exchanger 103 is reduced, so that the heating performance and the hot water supply performance may be degraded. In this case, a minimum comfortable heating performance and a minimum comfortable hot water supply performance for a user can be determined, and a minimum temperature of the circulation water can be determined such that a heating performance and a hot water supply performance are equal to or greater than the minimum comfortable heating performance and the minimum comfortable hot water supply performance. That is, when the temperature of the circulation water is over the water saving reference temperature, the heating performance and the hot water supply performance can be maintained within a range where a user feels comfortable.

However, if the temperature of the circulation water is equal to or less than the water saving reference temperature in operation S22, the circulation water is supplied and discharged in operation S24. That is, since the water supply adjustment part and the water discharge adjustment part open the circulation side supply passage 164 and the circulation side discharge passage 166, water from the water supply source is supplied to the circulation passage 162, and simultaneously, the circulation water is discharged from the circulation passage 162 to the outside.

At this point, the circulation water circulating through the circulation passage 162 is discharged, and new circulation water can circulate through the circulation passage 162. The temperature of the new circulation water introduced to the circulation passage 162 is higher than that of the previous one discharged after circulating through the circulation passage 162. Thus, the temperature of the circulation water can be maintained to be over the water saving reference temperature. That is, the heating performance and the hot water supply performance can be maintained within a range where a user feels comfortable.

Finally, if a signal for stopping the water saving operation is not input in operation S25, the temperature of the circulation water is sensed again in operation S21.

The water saving operation can save water flowing in the circulation passage 162. In more detail, if the temperature of the circulation water is over the water saving reference temperature, the circulation water circulates through the circulation passage 162 without a supply and a discharge of the circulation water, so that an amount of consumed circulation water per time is reduced. If the temperature of the circulation water is equal to or less than the water saving reference temperature, the circulation water is supplied and discharged, so that the temperature of the circulation water circulating through the circulation passage 162 can be maintained to be over the water saving reference temperature. Thus, the amount of water flowing through the circulation passage 162 can be minimized, and simultaneously, the heating performance and the hot water supply performance can be maintained.

When the hot water supply device 1 is in the cooling operation, if the temperature of the circulation water does not reach a reference temperature, the circulation water is circulated through the circulation passage 162, and thus, water can be saved, and simultaneously, the cooling performance can be maintained. At this point, the reference temperature denotes the maximum temperature value of the circulation water within a range where a required cooling performance can be satisfied.

The freezing and bursting prevention operation can be performed when the hot water supply device 1 is stopped. The water saving operation may be performed simultaneously with the hot water supply operation, the heating operation, or the cooling operation.

Hereinafter, a hot water supply device associated with a heat pump will be described in detail with reference to the accompanying drawings, according to a second embodiment. The current embodiment is different from the first embodiment in that refrigerant may be excessively cooled. In the current embodiment, a description of the same configuration as that of the first embodiment will be omitted.

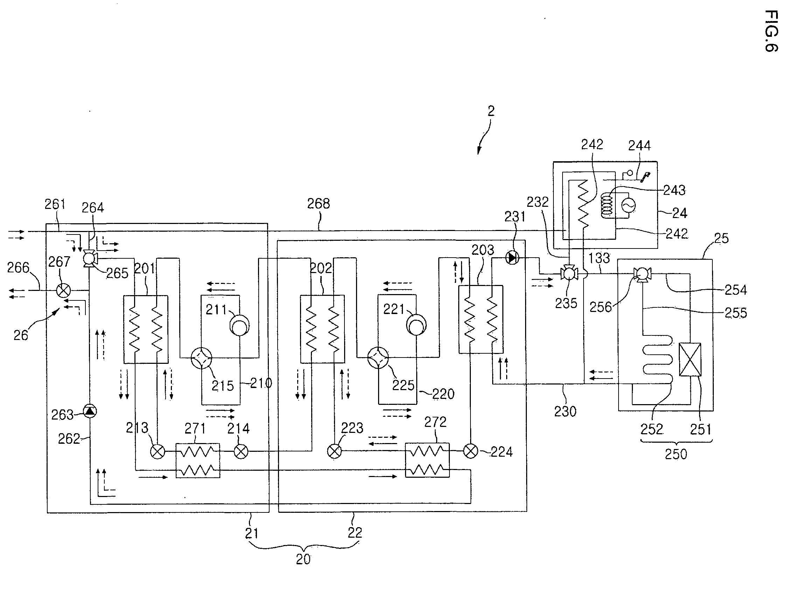

Fig. 6 is a schematic view illustrating a hot water supply device associated with a heat pump, according to the second embodiment.

Referring to Fig. 6, excessive coolers 271 and 272 are further provided.

In detail, the excessive coolers 271 and 272 include a first excessive cooler (also denoted by 271) excessively cooling a first refrigerant, and a second excessive cooler (also denoted by 272) excessively cooling a second refrigerant. The first excessive cooler 271 is installed between a cascade heat exchanger 202 and a first expander 213 on a first refrigerant cycle. The second excessive cooler 272 is installed between a usage side heat exchanger 203 and a second expander 223 on a second refrigerant cycle.

The excessive coolers 271 and 272 are installed at points corresponding to a discharge side of a heat source side heat exchanger 201 on a circulation passage 262. The excessive coolers 271 and 272 each may be configured as a water refrigerant heat exchanger accommodating a water passage and a refrigerant passage that are adjacent to each other to exchange heat between water and refrigerant.

Thus, when a hot water supply device 2 associated with a heat pump, according to the second embodiment, is in a heating operation, the first refrigerant heating the second refrigerant through the cascade heat exchanger 202 and condensed, and the second refrigerant heating usage side water through the usage side heat exchanger 203 and condensed can heat heat source side water, that is, circulation water through the excessive coolers 271 and 272 and be excessively cooled.

Water, which heats refrigerant through the heat source side heat exchanger 201 and is cooled, can be heated by absorbing heat from refrigerant through the excessive coolers 271 and 272. Thus, when the hot water supply device 2 is in a water saving operation, a temperature decrease rate of the circulation water can be decreased. That is, since circulation time of the circulation water may further increase in the water saving operation, the amount of saved water can further increase as a whole, and a water saving effect can be further improved.

A cooling expander 214 may be installed between the first excessive cooler 271 and the cascade heat exchanger 202, and a cooling expander 224 may be installed between the second excessive cooler 272 and the usage side heat exchanger 203. In this case, when the hot water supply device 2 is in a cooling operation, the first expander 213 and the second expander 223 are completely opened, and the refrigerants pass through the first and second excessive coolers 271 and 272 and are expanded in the cooling expanders 214 and 224, and thus, the refrigerant condensed through the heat source side heat exchanger 201 emits heat to the heat source side water in the excessive coolers 271 and 272 and can be excessively cooled.

Hereinafter, a hot water supply device associated with a heat pump will be described in detail with reference to the accompanying drawings, according to a third embodiment. The current embodiment is different from the first embodiment in that an air-conditioning heat exchanger is connected onto a refrigerant pipe. In the current embodiment, a description of the same configuration as that of the first embodiment will be omitted.

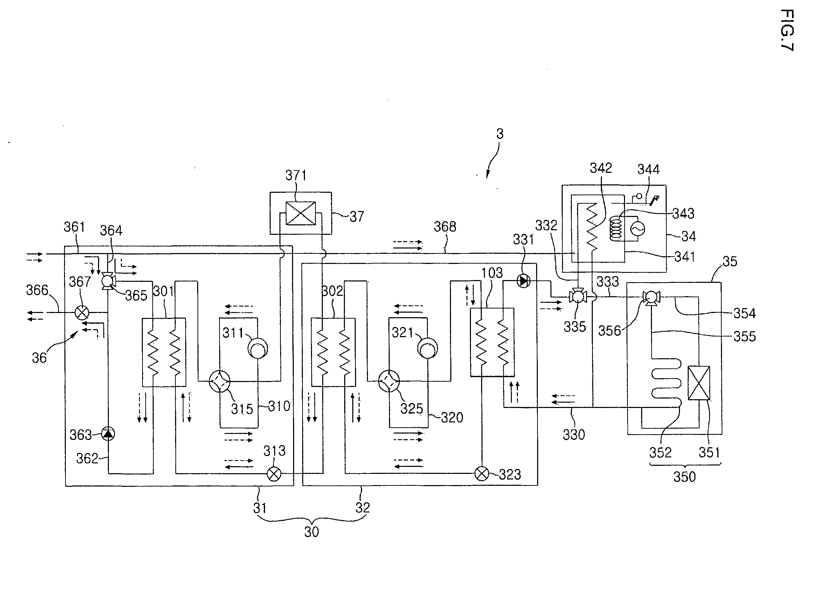

Fig. 7 is a schematic view illustrating a hot water supply device associated with a heat pump, according to the third embodiment.

Referring to FIG. 7, in the current embodiment, an air-conditioning heat exchanger 371 is connected to a side on a refrigerant pipe 310. That is, a refrigerant flowing through the air-conditioning heat exchanger 371 heats or cools indoor air to perform a heating or cooling operation.

In more detail, the air-conditioning heat exchanger 371 is installed between a first compressor 311 and a cascade heat exchanger 302 on a first refrigerant cycle. That is, the air-conditioning heat exchanger 371 is installed at an upstream side of the cascade heat exchanger 302 along a flow direction of a first refrigerant. Thus, when a hot water supply device 3 associated with a heat pump, according to the third embodiment, is in the heating operation, the first refrigerant discharged from the first compressor 311 heats indoor air through the air-conditioning heat exchanger 371 to heat an indoor space.

When the hot water supply device 3 is in the cooling operation, the refrigerant passing through a heat source side heat exchanger 301 is expanded through an expander 313, and then, cools indoor air through the air-conditioning heat exchanger 371 to cool the indoor space.

The air-conditioning heat exchanger 371 to be exposed to the indoor air may be accommodated in an indoor device 37 disposed at a side of the indoor space.

According to the current embodiment, a heating performance and a cooling performance can be improved. In more detail, in the current embodiment, the indoor air can be directly heated or cooled using the refrigerant, and thus, a heat transfer amount between the refrigerant and the indoor air can be increased than a method in which indoor air is heated or cooled using water heated or cooled by refrigerant. Thus, the heating performance and the cooling performance can be improved.

Especially, the heating performance and the cooling performance can be simultaneously improved. In more detail, the first refrigerant discharged from the first compressor 311 passes through the air-conditioning heat exchanger 371 first and is primarily condensed, and then, passes through the cascade heat exchanger 302. That is, since the refrigerant having the maximum temperature on the first refrigerant cycle is used to perform the heating operation, the heating performance can be improved. In addition, a heat pump 30 is configured as a two-stage refrigerant cycle, that is, a cascade cycle, and a condenser at a high stage, that is, a usage side heat exchanger 303 is used to perform a hot water supply operation, and thus, a hot water supply performance can be improved than in a case where the heat pump 30 is configured as a single-stage refrigerant cycle. Thus, the hot water supply performance and the heating performance can be simultaneously improved.

Hereinafter, a hot water supply device associated with a heat pump will be described in detail with reference to the accompanying drawings, according to a fourth embodiment. The current embodiment is different from the first embodiment in that a hot water supply part and a bottom heating/cooling part are provided using a desuperheater method. In the current embodiment, a description of the same configuration as that of the first embodiment will be omitted.

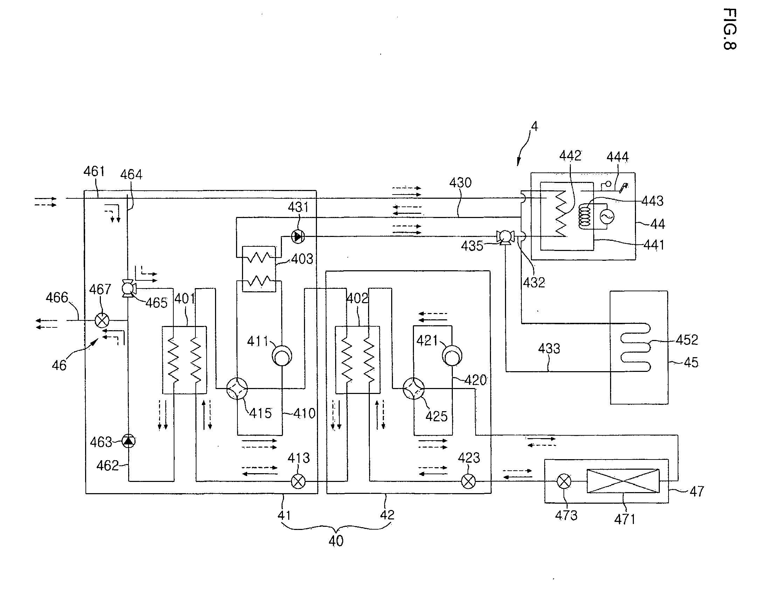

Fig. 8 is a schematic view illustrating a hot water supply device associated with a heat pump, according to the fourth embodiment.

Referring to FIG. 8, a hot water supply part 44 and a bottom heating/cooling part 45 are provided using a desuperheater method. Thus, a desuperheater heat exchanger 403 to be described later is used as a primary condenser in which the refrigerant at a discharge side of a first compressor 411 is primarily condensed, and any one of a cascade heat exchanger 402 and a heat source side heat exchanger 401 is used as a secondary condenser in which the refrigerant at the discharge side of the first compressor 411 is secondarily used.

In detail, in the current embodiment, the desuperheater heat exchanger 403 in which heat is exchanged between a first refrigerant discharged from the first compressor 411 and usage side water heating the hot water supply part 44 or the bottom heating/cooling part 45, a water pipe 430 guiding the water heated by the first refrigerant in the desuperheater heat exchanger 403 to the hot water supply part 44 or the bottom heating/cooling part 45, and an usage side pump 431 forcibly moving the water in the water pipe 430 are provided. A first refrigerant circulation part 41 further includes the desuperheater heat exchanger 403 in which the first refrigerant is heat-exchanged with water. That is, the desuperheater heat exchanger 403 is connected simultaneously to a first refrigerant pipe 410 and the water pipe 430 such that the first refrigerant is heat-exchanged with the water. The desuperheater heat exchanger 403 is installed between the first compressor 411 and a first flow switch part 415 on a first refrigerant cycle, to perform a hot water supply operation and a bottom heating operation regardless of switching between heating and cooling. Thus, even when a refrigerant flow direction is varied by the first flow switch part 415 according to the switching between heating and cooling, the first refrigerant at the discharge side of the first compressor 411 passes through the desuperheater heat exchanger 403.

The hot water supply part 44 is connected in parallel to the bottom heating/cooling part 45 with respect to the water pipe 430, and an usage side three-way valve 435 is disposed at a side on the water pipe 430 to direct the water passing through the desuperheater heat exchanger 403 to the hot water supply part 44 or the bottom heating/cooling part 45.

A second refrigerant circulation part 42 includes a second compressor 421, an air-conditioning heat exchanger 471 in which a second refrigerant is heat-exchanged with indoor air, second expanders 423 and 473, and the cascade heat exchanger 402. That is, the air-conditioning heat exchanger 471 is installed separately from the bottom heating/cooling part 45, that is, a bottom heat exchanger 452, and the air-conditioning heat exchanger 471 uses the second refrigerant to heat or cool the indoor space.

In the current embodiment, flows of the refrigerant and water are as follows. First, in the hot water supply operation or the bottom heating operation, the first refrigerant at the discharge side of the first compressor 411 heats the usage side water through the desuperheater heat exchanger 403 and is primarily condensed, and then, is introduced to the cascade heat exchanger 402 or the heat source side heat exchanger 401 through the first flow switch part 415.

At this point, the hot water supply operation or the bottom heating operation may be performed simultaneously with the air-conditioning heating or cooling operation. In more detail, when the air-conditioning heating operation is performed simultaneously with the hot water supply operation or the bottom heating operation, the first refrigerant passing through the desuperheater heat exchanger 403 is introduced to the cascade heat exchanger 402, and heats the second refrigerant through the cascade heat exchanger 402 and is secondarily condensed, and is introduced again to the first compressor 411 through a first expander 413 and the heat source side heat exchanger 401.

When the cooling operation is performed simultaneously with the hot water supply operation or the bottom heating operation, the first refrigerant passing through the desuperheater heat exchanger 403 heats the heat source side water through the heat source side heat exchanger 401 and is secondarily condensed, and then, is introduced to the cascade heat exchanger 402 through the first expander 413. The first refrigerant passing through the cascade heat exchanger 402 cools the second refrigerant and is evaporated, and then, is introduced again to the first compressor 411.

The second refrigerant of the second refrigerant circulation part 42 flows sequentially through the second compressor 421, the air-conditioning heat exchanger 471, the second expanders 473 and 423, and the cascade heat exchanger 402 in the air-conditioning heating operation, and flows sequentially through the second compressor 421, the cascade heat exchanger 402, the second expanders 423 and 473, and the air-conditioning heat exchanger 471 in the air-conditioning cooling operation.

The usage side water is forcibly moved by the usage side pump 431, and continually circulates between the desuperheater heat exchanger 403 and one of a hot water supply heat exchanger 442 and a bottom heat exchanger 452. At this point, the usage side water absorbs heat from the first refrigerant when passing through the desuperheater heat exchanger 403, and heats water in a hot water supply tank 441 or an indoor bottom when passing through one of the hot water supply heat exchanger 442 and the bottom heat exchanger 452. According to switching of the usage side three-way valve 435, the usage side water can selectively flow to one of the hot water supply heat exchanger 442 and the bottom heat exchanger 452. According to the current embodiment, the hot water supply performance and the heating performance can be improved. Since the first refrigerant at the discharge side of the first compressor 411 in the maximum temperature state on the first refrigerant cycle is introduced directly to the desuperheater heat exchanger 403, that is, since the hot water supply operation is performed using the first refrigerant at the maximum temperature on the first refrigerant cycle, the hot water supply performance can be improved. Although the heating performance can be degraded since condensation heat is primarily removed from the first refrigerant during the hot water supply operation, a heat pump 40 is configured as a two-stage cycle to compensate for this limitation and further improve the heating performance. The hot water supply operation can be continuously performed regardless of switching between heating and cooling. In more detail, the first refrigerant discharged from the first compressor 411 passes through the desuperheater heat exchanger 403 first, regardless of a refrigerant flow direction change by the first flow switch part 415. Thus, the hot water supply operation can be performed regardless of switching between heating and cooling.

In addition, the bottom heating operation and the indoor cooling can be simultaneously performed. For example, it may be necessary to dry a bottom and cool an indoor space in a wet and hot season such as a rainy season. In this case, the first refrigerant discharged from the first compressor 411 moves sequentially through the desuperheater heat exchanger 403, the heat source side heat exchanger 401, and the cascade heat exchanger 402 to perform both the bottom heating operation and the indoor cooling operation. At this point, the usage side three-way valve 435 allows the usage side water discharged from the desuperheater heat exchanger 403 to be introduced to the bottom heat exchanger 452. Also, the second refrigerant circulation part 42 is operated in a state for the air-conditioning cooling operation. Thus, the indoor bottom can be dried, and simultaneously, the indoor cooling operation can be performed.

Hereinafter, a hot water supply device associated with a heat pump will be described in detail with reference to the accompanying drawings, according to a fifth embodiment. The current embodiment is different from the fifth embodiment in that a desuperheater heat exchanger is connected to a second refrigerant circulation part and the amount of refrigerant introduced to the desuperheater heat exchanger and the amount of refrigerant bypassing the desuperheater heat exchanger may be varied. In the current embodiment, a description of the same configuration as that of the fourth embodiment will be omitted.

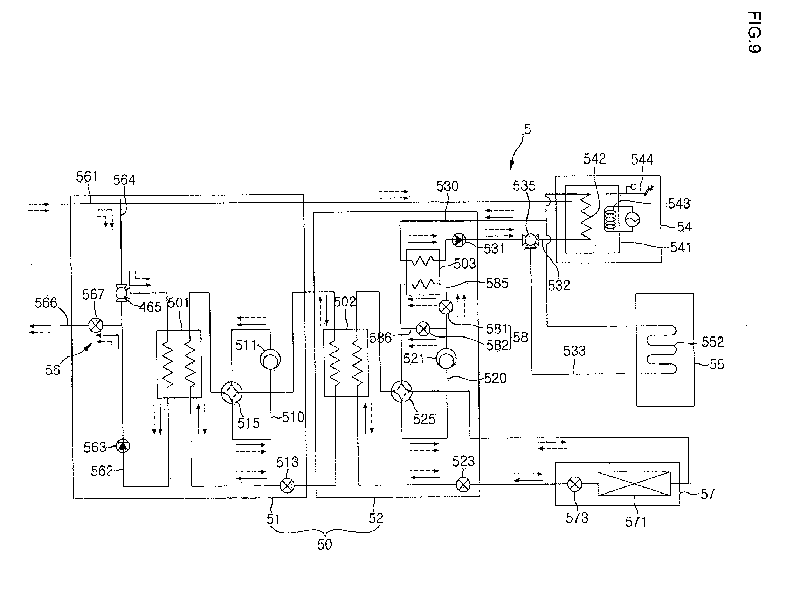

Fig. 9 is a schematic view illustrating a hot water supply device associated with a heat pump, according to the fifth embodiment.

Referring to Fig. 9, a desuperheater heat exchanger 503 is connected to a second refrigerant circulation part 52, and the amount of refrigerant introduced to the desuperheater heat exchanger 503 and the amount of refrigerant bypassing the desuperheater heat exchanger 503 may be varied.

In detail, the second refrigerant circulation part 52 includes the desuperheater heat exchanger 503 in which usage side water is heat-exchanged with a second refrigerant discharged from a second compressor 521, a desuperheater pipe 585 guiding the second refrigerant at a discharge side of the second compressor 521 to the desuperheater heat exchanger 503, a bypass pipe 586 guiding the second refrigerant at the discharge side of the second compressor 521 to bypass the desuperheater heat exchanger 503, and a flow rate adjustment part 58 for adjusting the amount of refrigerant introduced to the desuperheater heat exchanger 503 and the amount of refrigerant bypassing the desuperheater heat exchanger. The flow rate adjustment part 58 includes a desuperheater flow rate adjustment part 581 installed on the desuperheater pipe 585 to adjust the amount of refrigerant introduced from the second compressor 521 to the desuperheater heat exchanger 503, and a bypass flow rate adjustment part 582 installed on the bypass pipe 586 to adjust the amount of refrigerant discharged from the second compressor 521 and bypassing the desuperheater heat exchanger 503.

The desuperheater heat exchanger 503 is installed between the second compressor 521 and a second flow switch part 525 on a second refrigerant cycle, to perform the hot water supply operation and the bottom heating operation regardless of switching between air-conditioning heating and cooling. Thus, after passing through the desuperheater heat exchanger 503, the discharge side refrigerant of the second compressor 521 can selectively flow to one of an air-conditioning heat exchanger 571 and a cascade heat exchanger 502 according to a refrigerant flow direction change by the second flow switch part 525.

The amount of refrigerant introduced to the desuperheater heat exchanger 503 and the amount of refrigerant bypassing the desuperheater heat exchanger 503 can be adjusted according to a hot water supply load and a heating/cooling load. For example, when the hot water supply load is greater than the heating/cooling load, the amount of refrigerant introduced to the desuperheater heat exchanger 503 can be controlled to be increased, and the amount of refrigerant bypassing the desuperheater heat exchanger 503 can be controlled to be decreased. In addition, when the heating/cooling load is greater than the hot water supply load, the amount of refrigerant introduced to the desuperheater heat exchanger 503 can be controlled to be decreased, and the amount of refrigerant bypassing the desuperheater heat exchanger 503 can be controlled to be increased.

The hot water supply load may be a difference between a water discharge temperature of a hot water supply part 54 and a target temperature thereof, and the heating/cooling load may be a difference between the temperature of the indoor space, which is a heating/cooling target of the air-conditioning heat exchanger 571, and a target temperature of the indoor space.

According to the current embodiment, regardless of heating or cooling of the indoor space, the hot water supply operation can be continuously performed. According to the current embodiment, the hot water supply or bottom heating operation and the air-conditioning heating/cooling operation can be simultaneously performed.

According to the current embodiment, an operation state of a hot water supply device 5 associated with a heat pump can be optimized according to the hot water supply load and the heating/cooling load. In detail, when the hot water supply operation and the heating/cooling operation are simultaneously performed, the amount of hot water supply side refrigerant flowing through the desuperheater heat exchanger 503 and the amount of heating/cooling side refrigerant bypassing the desuperheater heat exchanger 503 and flowing directly to the air-conditioning heat exchanger 571 or the cascade heat exchanger 502 can be adjusted according to the hot water supply load and the heating/cooling load.

In more detail, when the hot water supply load is greater than the heating/cooling load, the amount of refrigerant passing through the desuperheater heat exchanger 503 increases, that is, the amount of heat transmitted to water of a hot water supply tank 541 through a hot water supply heat exchanger 542 increases, a hot water supply target condition can be achieved more quickly. In addition, when the heating/cooling load is greater than the hot water supply load, the amount of refrigerant bypassing the desuperheater heat exchanger 503 increases, and thus, the amount of refrigerant discharged from the second compressor 521 to the air-conditioning heat exchanger 571 increases in the heating operation. Thus, the amount of heat transmitted to the indoor space through the air-conditioning heat exchanger 571 increases to further improve the heating performance. Thus, the operation state of the hot water supply device 5 can be optimized according to the hot water supply load, that is, operation conditions.

Hereinafter, a hot water supply device associated with a heat pump will be described in detail with reference to the accompanying drawings, according to a sixth embodiment. The current embodiment is different from the fifth embodiment in that a desuperheater heat exchanger connected to a first refrigerant circulation part is further added. In the current embodiment, a description of the same configuration as that of the fifth embodiment will be omitted.

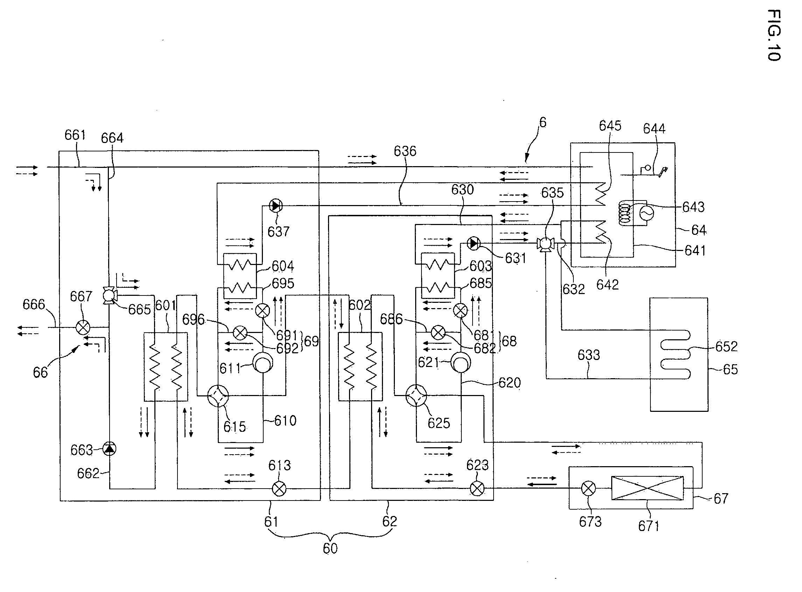

Fig. 10 is a schematic view illustrating a hot water supply device associated with a heat pump, according to the sixth embodiment.

Referring to FIG. 10, a desuperheater heat exchanger 603 and a desuperheater heat exchanger 604 connected to a first refrigerant circulation part 61 are added.

In detail, the first refrigerant circulation part 61 includes a first desuperheater heat exchanger (also denoted by 604) in which usage side water is heat-exchanged with a first refrigerant discharged from a first compressor 611, a desuperheater pipe 695 guiding the first refrigerant at a discharge side of the first compressor 611 to the first desuperheater heat exchanger 604, a first bypass pipe 696 guiding the first refrigerant at the discharge side of the first compressor 611 to bypass the first desuperheater heat exchanger 604, and a first flow rate adjustment part 69 for adjusting the amount of refrigerant introduced to the first desuperheater heat exchanger 604 and the amount of refrigerant bypassing the first desuperheater heat exchanger 604. The first flow rate adjustment part 69 includes a first desuperheater flow rate adjustment part 691 installed on the first desuperheater pipe 695 to adjust the amount of refrigerant introduced from the first compressor 611 to the first desuperheater heat exchanger 604, and a first bypass flow rate adjustment part 692 installed on the first bypass pipe 696 to adjust the amount of refrigerant discharged from the first compressor 611 and bypassing the first desuperheater heat exchanger 604.

A second refrigerant circulation part 62 includes a second desuperheater heat exchanger (also denoted by 603) in which usage side water is heat-exchanged with a second refrigerant discharged from a second compressor 621, a second desuperheater pipe 685 guiding the second refrigerant at a discharge side of the second compressor 621 to the second desuperheater heat exchanger 603, a second bypass pipe 686 guiding the second refrigerant at the discharge side of the second compressor 621 to bypass the second desuperheater heat exchanger 603, and a second flow rate adjustment part 68 for adjusting the amount of refrigerant introduced to the second desuperheater heat exchanger 603 and the amount of refrigerant bypassing the second desuperheater heat exchanger 603. The second flow rate adjustment part 68 includes a second desuperheater flow rate adjustment part 681 installed on the second desuperheater pipe 685 to adjust the amount of refrigerant introduced from the second compressor 621 to the second desuperheater heat exchanger 603, and a second bypass flow rate adjustment part 682 installed on the second bypass pipe 686 to adjust the amount of refrigerant discharged from the second compressor 621 and bypassing the second desuperheater heat exchanger 603.

The first desuperheater heat exchanger 604 is connected simultaneously to the first refrigerant circulation part 61 and a hot water supply part 64, and the second desuperheater heat exchanger 603 is connected simultaneously to the second refrigerant circulation part 62, the hot water supply part 64, and a bottom heating part 65.

According to the current embodiment, the hot water supply operation and the bottom heating operation can be simultaneously performed. In more detail, the usage side water passing through the first desuperheater heat exchanger 604 flows to the hot water supply part 64, and simultaneously, the usage side water passing through the second desuperheater heat exchanger 603 flows to the bottom heating part 65. At this point, a usage side three-way valve 635 continually guides the water discharged from the second desuperheater heat exchanger 603 to the bottom heating part 65. Thus, the hot water supply operation and the bottom heating operation can be simultaneously performed.

In addition, the amounts of refrigerants passing through and bypassing the first desuperheater heat exchanger 604 and the second desuperheater heat exchanger 603 can be varied.

According to the current embodiment, an operation state of a hot water supply device 6 associated with a heat pump can be optimized according to the hot water supply load and the heating/cooling load. In detail, in the hot water supply operation and the heating/cooling operation, the amount of hot water supply side refrigerant flowing through the first and second desuperheater heat exchangers 604 and 603 and the amount of heating/cooling side refrigerant bypassing the first and second desuperheater heat exchangers 604 and 603 can be adjusted according to the hot water supply load and the heating/cooling load. For example, when the hot water supply load is greater than the heating/cooling load, the amount of refrigerant introduced to the first and second desuperheater heat exchangers 604 and 603 can be controlled to be increased, and the amount of refrigerant bypassing the first and second desuperheater heat exchangers 604 and 603 can be controlled to be decreased. In addition, when the heating/cooling load is greater than the hot water supply load, the amount of refrigerant introduced to the first and second desuperheater heat exchangers 604 and 603 can be controlled to be decreased, and the amount of refrigerant bypassing the first and second desuperheater heat exchangers 604 and 603 can be controlled to be increased.

The hot water supply load may be a difference between a water discharge temperature of the hot water supply part 64 and a target temperature thereof, and the heating/cooling load may be a difference between the temperature of an indoor space, which is a heating/cooling target of the air-conditioning heat exchanger 671, and a target temperature of the indoor space.

Hereinafter, a hot water supply device associated with a heat pump will be described in detail with reference to the accompanying drawings, according to a seventh embodiment. The current embodiment is different from the first embodiment in that vapor refrigerants of refrigerants condensed on a refrigerant cycle are injected to compressors. In the current embodiment, a description of the same configuration as that of the first embodiment will be omitted.

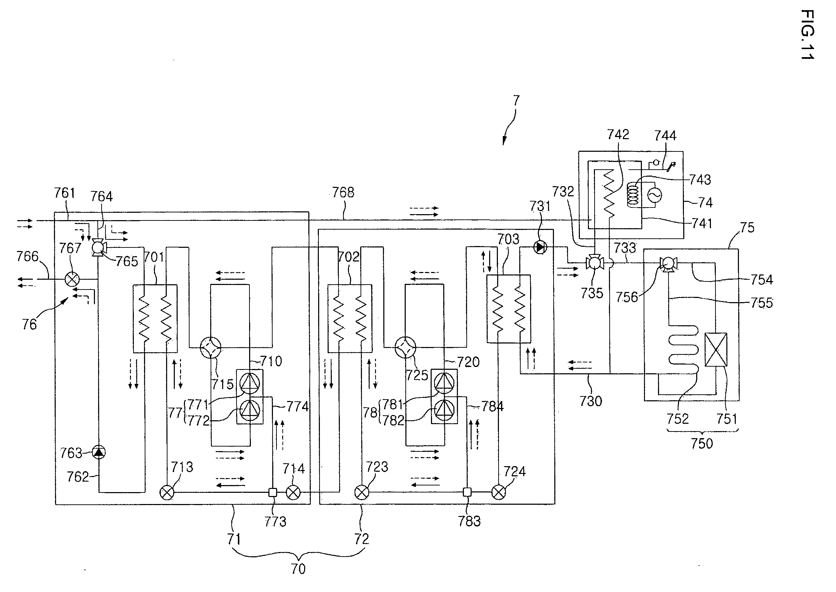

Fig. 11 is a schematic view illustrating a hot water supply device associated with a heat pump, according to the seventh embodiment.

Referring to FIG. 11, in the current embodiment, vapor refrigerants of refrigerants condensed on a refrigerant cycle are injected to compressors 77 and 78.

In detail, a first compressor (also denoted by 77) is configured as a multi-stage compressor that includes a first low stage compression part 772 primarily compressing a first refrigerant and a first middle compression part 771 secondarily compressing the first refrigerant compressed in the first low stage compression part 772. In addition, a second compressor (also denoted by 78) is configured as a multi-stage compressor that includes a second low stage compression part 782 primarily compressing a second refrigerant and a second middle compression part 781 secondarily compressing the second refrigerant compressed in the second low stage compression part 782.

In the current embodiment, a first phase divider 773 dividing the first refrigerant condensed in a cascade heat exchanger 702 or a heat source side heat exchanger 701 on a first refrigerant cycle to a vapor refrigerant and a liquid refrigerant, a first injection pipe 774 for injecting the vapor refrigerant divided at the first phase divider 773 to the first middle compression part 771 of the first compressor 77, a second phase divider 783 dividing the second refrigerant condensed in the cascade heat exchanger 702 or a usage side heat exchanger 703 on a second refrigerant cycle to a vapor refrigerant and a liquid refrigerant, and a second injection pipe 784 for injecting the vapor refrigerant divided at the second phase divider 783 to the second middle compression part 781 of the second compressor 78 are provided. A first expander 713 and a second expander 714 are disposed at both sides of the first phase divider 773 on the first refrigerant cycle, and a third expander 723 and a fourth expander 724 are disposed at both sides of the second phase divider 783 on the second refrigerant cycle.

According to the current embodiment, in a heating operation, the first refrigerant flowing between the cascade heat exchanger 702 and the heat source side heat exchanger 701 can be injected to the first compressor 77 in a first refrigerant circulation part 71, and the second refrigerant flowing between the cascade heat exchanger 702 and the usage side heat exchanger 703 can be injected to the second compressor 78 in a second refrigerant circulation part 72, and thus, the amount of refrigerant flowing to the usage side heat exchanger 703 increases to further improve the hot water supply and heating performances. Especially, although an evaporation heat amount of the first refrigerant may decrease in the heat source side heat exchanger 701 to degrade the entire heating performance when the temperature of the heat source side water is relatively low, the first and second refrigerants are injected as described above to improve the heating performance.

First and second injection valves selectively close the first and second injection pipes 774 and 784 to selectively inject the first and second refrigerants to the first and second compressors 77 and 78 according to outside temperatures. For example, when the heat source side water, that is, circulation water has a temperature that is a reference temperature or greater, the first and second injection valves can be controlled to be continually closed, and, when the heat source side water has a temperature that is less than the reference temperature, the first and second injection valves can be controlled to be continually opened.

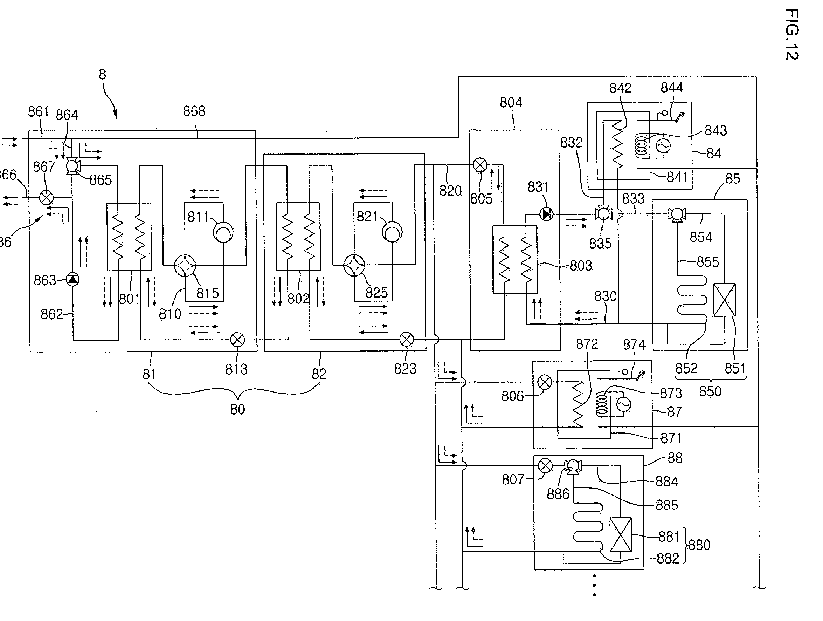

Hereinafter, a hot water supply device associated with a heat pump will be described in detail with reference to the accompanying drawings, according to an eighth embodiment. The current embodiment is different from the first embodiment in that a hot water supply device associated with a heat pump is configured as a multi-system including a plurality of hot water supply parts and a plurality of heating/cooling parts. In the current embodiment, a description of the same configuration as that of the first embodiment will be omitted. Fig. 12 is a schematic view illustrating a hot water supply device associated with a heat pump, according to the eighth embodiment.

Referring to FIG. 12, a hot water supply device associated with a heat pump, according to the current embodiment, is configured as a multi-system including a plurality of hot water supply parts 84 and 87 and a plurality of heating/cooling parts 85 and 88. That is, a single heat pump 80 can be used to perform a hot water supply operation of the hot water supply parts 84 and 87 and a heating/cooling operation of the heating/cooling parts 85 and 88. The heat pump 80 is provided using a two-stage refrigerant cycle, that is, a cascade method.

In detail, the hot water supply device according to the eighth embodiment includes the heat pump 80 in which heat source side water is heat-exchanged with second refrigerant, a relay 804 in which usage side water is heat-exchanged with the second refrigerant disposed from the heat pump 80, a first hot water supply part 84 using water discharged from the relay 804 to perform a hot water supply operation, a first heating/cooling part 85 using water discharged from the relay 804 to heat and cool an indoor space, a second hot water supply part 87 using the second refrigerant discharged from the heat pump 80 to perform a hot water supply operation, a second heating/cooling part 88 using the second refrigerant discharged from the heat pump 80 to heat and cool the indoor space.

The heat pump 80 and the relay 804 are connected to a second refrigerant pipe 820, and the first hot water supply part 84 and the first heating/cooling part 85 are connected through a water pipe 830 to the relay 804. That is, the first hot water supply part 84 and the first heating/cooling part 85 are indirectly connected to the heat pump 80 through the relay 804. The second hot water supply part 87 and the second heating/cooling part 88 are directly connected to the heat pump 80 through the second refrigerant pipe 820. At this point, the relay 804, the second hot water supply part 87, and the second heating/cooling part 88 are connected to the heat pump 80 in parallel. That is, the second refrigerant discharged from the heat pump 80 may be distributed to the relay 804, the second hot water supply part 87, and the second heating/cooling part 88 to flow.

The usage side water is heat-exchanged with water of a hot water supply tank 841 in a hot water supply heat exchanger 842 of the first hot water supply part 84, and the second refrigerant is heat-exchanged with water of a hot water supply tank 871 in a hot water supply heat exchanger 872 of the second hot water supply part 87.

Thus, the first hot water supply part 84 and the first heating/cooling part 85 indirectly receive, through the usage side water, heat from the second refrigerant heated by the heat source side water, and the second hot water supply part 87 and the second heating/cooling part 88 directly receives heat from the second refrigerant heated by the heat source side water.

A hot water supply side supply passage 832 is connected to the hot water supply tank 841 of the first hot water supply part 84 and the hot water supply tank 872 of the second hot water supply part 87, so that water can be continually supplied to the hot water supply tanks 841 and 872 of the first and second hot water supply parts 84 and 87.

The second refrigerant pipe 820 connected to the relay 804, the second hot water supply part 87, and the second heating/cooling part 88 is provided with flow rate adjustment parts 805, 806, and 807 corresponding respectively to the relay 804, the second hot water supply part 87, and the second heating/cooling part 88, so that the amount of refrigerant introduced to the relay 804, the second hot water supply part 87, and the second heating/cooling part 88 can be adjusted. The amount of refrigerant introduced to the relay 804, the second hot water supply part 87, and the second heating/cooling part 88 can be adjusted according to hot water supply loads and heating/cooling loads of the first hot water supply part 84, the first heating/cooling part 85, the second hot water supply part 87, and the second heating/cooling part 88.

According to the current embodiment, the single heat pump 80 can be used to perform a hot water supply operation and a heating/cooling operation on a plurality of usage places. For example, the first hot water supply part 84 and the first heating/cooling part 85 are installed at a first usage place, and the second hot water supply part 87 and the second heating/cooling part 88 are installed at a second usage place, so that a hot water supply operation and a heating/cooling operation can be simultaneously or selectively performed on the first and second usage places.

## Claims

1. A hot water supply device (1) associated with a heat pump and using the heat pump to perform a hot water supply operation, the hot water supply device comprising:
a cascade heat pump (10), including
a first refrigerant circulation part (11) that circulates a first refrigerant including a first compressor (111), a cascade heat exchanger (102) in which heat is exchanged between the first refrigerant and a second refrigerant, a first expander (113), a first refrigerant-water heat exchanger (101) configured such that the first refrigerant absorbs or emits heat, so as to form a first refrigerant cycle; and
a second refrigerant circulation part (12) that circulates the second refrigerant, including a second compressor (121), a second refrigerant-water heat exchanger (103) using the second refrigerant to perform at least one of the hot water supply operation and a heating/cooling operation, a second expander (123), and the cascade heat exchanger (102), so as to form a second refrigerant cycle,
**characterized in that** the hot water supply device (1) further comprises:
a hot water supply part (14) configured to perform the hot water supply operation using at least one of the first refrigerant or the second refrigerant;
a water supply part (16) that supplies water to the first refrigerant-water heat exchanger (101) and the hot water supply part (14), the water supply part comprising:
a water supply passage (161) configured to receive water from a water supply source;
a circulation passage (162) in which water to be heat-exchanged with the refrigerant in the first refrigerant-water heat exchanger (101) circulates, the circulation passage (162) being connected to the first refrigerant-water heat exchanger (101);
a circulation side supply passage (164) connected to the water supply passage (161) and extending to the circulation passage (162) so configured to supply the water in the water supply passage (161) to the circulation passage (162); and
a circulation side discharge passage (166) connected to the circulation passage (162) configured to discharge water from the circulation passage (162),
a hot water supply side supply passage (168) connected to the water supply passage configured to guide water from the water supply passage (161) to the hot water supply part (14);
wherein water flowing in the circulation passage (162) and water stored in the hot water supply part (14) are supplied from the same water supply source, and
wherein the refrigerants flowing through the first refrigerant-water heat exchanger (101) and the second refrigerant-water heat exchanger (103) are heat-exchanged with water to continuously perform the hot water supply operation without a defrosting operation.

2. The hot water supply device according to claim 1, wherein the hot water supply part (14) comprises:
a hot water supply tank (141) storing water to be supplied as hot water;
an auxiliary heater (143) selectively heating the water of the hot water supply tank; and
a water discharge passage (144) for supplying the water of the hot water supply tank as hot water,
wherein the water stored in the hot water supply tank and the water heat-exchanged with the first refrigerant in the first refrigerant-water heat exchanger (101) are supplied from the water supply part (16).

3. The hot water supply device according to claim 1, further comprising a circulation side pump (163) for forcibly moving the water of the circulation passage (162),
wherein the water of the circulation passage circulates when a temperature of water of the water supply part is equal to or less than a freezing and bursting reference temperature to prevent freezing and bursting of the water supply part, and
an operation state before the water of the circulation passage circulates returns when the temperature of the water of the water supply part is greater than the freezing and bursting reference temperature.

4. The hot water supply device according to any of claims 1 or 2, further comprising a circulation passage for circulating water flowing through the heat source side heat exchanger, configured such that
the water of the circulation passage circulates without supplying and discharging the water of the circulation passage to save the water flowing through the first refrigerant-water heat exchanger (101) when a temperature of the water of the circulation passage is greater than a circulation reference temperature, and
the water of the circulation passage is supplied and discharged to and from when the temperature of the water of the circulation passage is equal to or less than the circulation reference temperature.

5. The hot water supply device according to claim 4, further comprising:
a water supply adjustment part (165) selectively preventing a supply of water through the circulation side supply passage (164);
a water discharge adjustment part (167) selectively preventing a discharge of the water through the circulation side discharge passage (166),
wherein the water supply adjustment part and the water discharge adjustment part close the circulation side supply passage and the circulation side discharge passage when the temperature of the water of the circulation passage is greater than the circulation reference temperature, and
the water supply adjustment part (165) and the water discharge adjustment part (167) open the circulation side supply passage (164) and the circulation side discharge passage (166) when the temperature of the water of the circulation passage is equal to or less than the circulation reference temperature.

6. The hot water supply device according to any of claims 1 to 5, wherein water passing through the first refrigerant-water heat exchanger (101) cools at least one of the first refrigerant and the second refrigerant.

7. The hot water supply device according to claim 6, further comprising at least one of a first excessive cooler (271) in which the water passing through the first refrigerant-water heat exchanger (101) is heat-exchanged with the first refrigerant condensed in one of the cascade heat exchanger and the first refrigerant-water heat exchanger (101), so as to cool and condense the first refrigerant; and
a second excessive cooler (272) in which the water passing through the first refrigerant-water heat exchanger (101) is heat-exchanged with the second refrigerant condensed in one of the second refrigerant-water heat exchanger (103) and the cascade heat exchanger, so as to cool and condense the second refrigerant.

8. The hot water supply device according to any of claims 1 to 7, further comprising an air-conditioning heating/cooling part (15) using the first refrigerant or the second refrigerant to heat indoor air to perform an indoor heating/cooling operation.

9. The hot water supply device according to claim 8, wherein, when the hot water supply operation and a heating operation are simultaneously performed,
an air-conditioning heat exchanger (151) is installed at an upstream side of the cascade heat exchanger (102) along a flow direction of the first refrigerant to improve a heating performance by using a refrigerant having a high temperature at a discharge side of the first compressor, and
the hot water supply part (14) is connected to the second refrigerant-water heat exchanger (103) to improve a hot water supply performance by using a cascade cycle.

10. The hot water supply device according to any one of preceding claims, further comprising a first flow switch part (115) and a second flow switch part (125) that respectively switch a refrigerant flow direction of the first refrigerant circulation part and a refrigerant flow direction of the second refrigerant circulation part according to switching between heating and cooling,
wherein the hot water supply part (14) is connected between the compressor and the flow switch part on a refrigerant cycle of the refrigerant circulation part connected with the hot water supply part, to perform the hot water supply operation regardless of the switching between the heating and the cooling.

11. The hot water supply device according to any one of preceding claims, further comprising a desuperheater heat exchanger (403) in which the refrigerant having a high temperature and discharged from at least one of the first compressor and the second compressor flows,
wherein the hot water supply operation is performed by using water heat-exchanged with the refrigerant in the desuperheater heat exchanger to heat water of the hot water supply part.

## Patentansprüche

1. Heißwasserversorgungsvorrichtung (1), die mit einer Wärmepumpe assoziiert ist und die die Wärmepumpe verwendet, um einen Heißwasserversorgungsbetrieb durchzuführen, wobei die Heißwasserversorgungsvorrichtung (1) aufweist:
eine Kaskadenwärmepumpe (10), die aufweist:
einen ersten Kältemittelzirkulationsteil (11), der ein erstes Kältemittel zirkuliert, der aufweist: einen ersten Kompressor (111), einen Kaskadenwärmetauscher (102), in dem Wärme zwischen dem ersten Kältemittel und einem zweiten Kältemittel ausgetauscht wird, eine erste Ausdehnungsvorrichtung (113), einen ersten Kältemittel-Wasser-Wärmetauscher (101), der derart konfiguriert ist, dass das erste Kältemittel Wärme aufnimmt oder emittiert, um einen ersten Kältemittelkreislauf zu bilden; und
einen zweiten Kältemittelzirkulationsteil (12), der ein zweites Kältemittel zirkuliert, der aufweist: einen zweiten Kompressor (121), einen zweiten Kältemittel-Wasser-Wärmetauscher (103), der das zweite Kältemittel verwendet, um den Heißwasserversorgungsbetrieb und/oder den Heiz-/Kühlbetrieb durchzuführen, eine zweite Ausdehnungsvorrichtung (123) und den Kaskadenwärmetauscher (102), um einen zweiten Kältemittelkreislauf zu bilden,
**dadurch gekennzeichnet, dass** die Heißwasserversorgungsvorrichtung (1) ferner aufweist:
einen Heißwasserzuführungsteil (14), der konfiguriert ist, um den Heißwasserversorgungsbetrieb unter Verwendung des ersten Kältemittels und/oder des zweiten Kältemittels durchzuführen;
einen Wasserzuführungsteil (16), der Wasser an den ersten Kältemittel-Wasser-Wärmetauscher (101) und den Heißwasserzuführungsteil (14) zuführt, wobei der Wasserzuführungsteil aufweist:
einen Wasserzuführungsdurchgang (161), der konfiguriert ist, um Wasser von einer Wasserversorgungsquelle zu erhalten;
einen Zirkulationsdurchgang (162), in dem Wasser, das mit dem Kältemittel in dem ersten Kältemittel-Wasser-Wärmetauscher (101) Wärme austauschen soll, zirkuliert, wobei der Zirkulationsdurchgang (162) mit dem ersten Kältemittel-Wasser-Wärmetauscher (101) verbunden ist;
einen zirkulationsseitigen Zuführungsdurchgang (164), der mit dem Wasserzuführungsdurchgang (161) verbunden ist und sich zu dem Zirkulationsdurchgang (162) erstreckt, der aufgebaut ist, um das Wasser in dem Wasserzuführungsdurchgang (161) an den Zirkulationsdurchgang (162) zuzuführen; und
einen zirkulationsseitigen Abgabedurchgang (166), der mit dem Zirkulationsdurchgang (162) verbunden ist, der konfiguriert ist, um Wasser von dem Zirkulationsdurchgang (162) abzugeben,
einen heißwasserzuführungsseitigen Zuführungsdurchgang (168), der mit dem Wasserzuführungsdurchgang verbunden ist, der konfiguriert ist, um Wasser von dem Wasserzuführungsdurchgang (161) zu dem Heißwasserzuführungsteil (14) zu leiten;
wobei das in dem Zirkulationsdurchgang (162) strömende Wasser und in dem Heißwasserzuführungsteil (14) gelagertes Wasser von der gleichen Wasserversorgungsquelle zugeführt werden, und
wobei die Kältemittel, die durch den ersten Kältemittel-Wasser-Wärmetauscher (101) und den zweiten Kältemittel-Wasser-Wärmetauscher (103) strömen, mit Wasser Wärme austauschen, um den Wasserversorgungsbetrieb ohne einen Entfrostungsbetrieb kontinuierlich durchzuführen.

2. Heißwasserversorgungsvorrichtung nach Anspruch 1, wobei der Heißwasserzuführungsteil (14) aufweist:
einen Heißwasserversorgungsbehälter (141), der Wasser lagert, das als heißes Wasser zugeführt werden soll;
eine Hilfsheizung (143), die das Wasser des Heißwasserversorgungsbehälters selektiv heizt; und
einen Wasserabgabedurchgang (144) zum Zuführen des Wassers des Heißwasserversorgungsbehälters als heißes Wasser,
wobei das in dem Heißwasserversorgungsbehälter gelagerte Wasser und das Wasser, das in dem ersten Kältemittel-Wasser-Wärmetauscher (101) mit dem ersten Kältemittel Wärme austauscht, von dem Wasserzuführungsteil (16) zugeführt werden.

3. Heißwasserversorgungsvorrichtung nach Anspruch 1, die ferner eine zirkulationsseitige Pumpe (163) zum zwangsweisen Bewegen des Wassers des Zirkulationsdurchgangs (162) aufweist,
wobei das Wasser des Zirkulationsdurchgangs zirkuliert, wenn eine Temperatur von Wasser des Wasserzuführungsteils kleiner oder gleich einer Gefrier- und Platzreferenztemperatur ist, um das Frieren und Platzen des Wasserzuführungsteils zu verhindern, und
wobei ein Betriebszustand, bevor das Wasser des Zirkulationsdurchgangs zirkuliert, wiederkehrt, wenn die Temperatur des Wassers des Wasserzuführungsteils größer als die Gefrier- und Platzreferenztemperatur ist.

4. Heißwasserversorgungsvorrichtung nach einem der Ansprüche 1 oder 2, die ferner einen Zirkulationsdurchgang zum Zirkulieren von Wasser, das durch den wärmequellenseitigen Wärmetauscher strömt, aufweist, die derart konfiguriert ist, dass
das Wasser des Zirkulationsdurchgangs zirkuliert, ohne das Wasser des Zirkulationsdurchgangs zuzuführen und abzugeben, um das durch den ersten Kältemittel-Wasser-Wärmetauscher (101) strömende Wasser zu sparen, wenn eine Temperatur des Wassers des Zirkulationsdurchgangs größer als eine Zirkulationsreferenztemperatur ist, und
das Wasser des Zirkulationsdurchgangs an sie zugeführt und von ihr abgegeben wird, wenn die Temperatur des Wassers des Zirkulationsdurchgangs kleiner oder gleich der Zirkulationsreferenztemperatur ist.

5. Heißwasserversorgungsvorrichtung nach Anspruch 4, die ferner aufweist:
einen Wasserzuführungseinstellteil (165), der eine Zuführung von Wasser durch den zirkulationsseitigen Zuführungsdurchgang (164) selektiv verhindert;
einen Wasserabgabeeinstellteil (167), der eine Abgabe des Wassers durch den zirkulationsseitigen Abgabedurchgang (166) selektiv verhindert,
wobei der Wasserzuführungseinstellteil und der Wasserabgabeeinstellteil den zirkulationsseitigen Zuführungsdurchgang und den zirkulationsseitigen Abgabedurchgang schließen, wenn die Temperatur des Wassers des Zirkulationsdurchgangs größer als die Zirkulationsreferenztemperatur ist, und
der Wasserzuführungseinstellteil (165) und der Wasserabgabeeinstellteil (167) den zirkulationsseitigen Zuführungsdurchgang (164) und den zirkulationsseitigen Abgabedurchgang (166) öffnen, wenn die Temperatur des Wassers des Zirkulationsdurchgangs kleiner oder gleich der Zirkulationsreferenztemperatur ist.

6. Heißwasserversorgungsvorrichtung nach einem der Ansprüche 1 bis 5, wobei Wasser, das den ersten Kältemittel-Wasser-Wärmetauscher (101) durchläuft, das erste Kältemittel und/oder das zweite Kältemittel kühlt.

7. Heißwasserversorgungsvorrichtung nach Anspruch 6, die ferner aufweist:
einen ersten Kühler (271) für übermäßige Wärme, in dem das Wasser, das den ersten Kältemittel-Wasser-Wärmetauscher (101) durchläuft, mit dem ersten Kältemittel, das in dem Kaskadenwärmetauscher oder dem ersten Kältemittel-Wasser-Wärmetauscher (101) kondensiert wurde, Wärme austauscht, um das erste Kältemittel zu kühlen und zu kondensieren; und/oder
einen zweiten Kühler (272) für übermäßige Wärme, in dem das Wasser, das den ersten Kältemittel-Wasser-Wärmetauscher (101) durchläuft, mit dem zweiten Kältemittel, das in dem zweiten Kältemittel-Wasser-Wärmetauscher (103) oder in dem Kaskadenwärmetauscher kondensiert wurde, Wärme austauscht, um das zweite Kältemittel zu kühlen und zu kondensieren.

8. Heißwasserversorgungsvorrichtung nach einem der Ansprüche 1 bis 7, die ferner einen Klimatisierungs-Heiz/Kühlteil (15) aufweist, der das erste Kältemittel oder das zweite Kältemittel verwendet, um Innenluft zu heizen, um einen Innenheiz-/Kühlbetrieb durchzuführen.

9. Heißwasserversorgungsvorrichtung nach Anspruch 8, wobei, wenn der Heißwasserversorgungsbetrieb und ein Heizbetrieb gleichzeitig durchgeführt werden,
ein Klimatisierungswärmetauscher (151) entlang einer Strömungsrichtung des ersten Kältemittels auf einer strömungsaufwärtigen Seite des Kaskadenwärmetauschers (102) installiert ist, um eine Heizleistung unter Verwendung eines Kältemittels mit einer hohen Temperatur auf einer Abgabeseite des ersten Kompressors zu verbessern, und
der Heizwasserzuführungsteil (14) mit dem zweiten Kältemittel-Wasser-Wärmetauscher (103) verbunden ist, um eine Heißwasserversorgungsleistung unter Verwendung eines Kaskadenkreislaufs zu verbessern.

10. Heißwasserversorgungsvorrichtung nach einem der vorhergehenden Ansprüche, die ferner einen ersten Strömungsumschaltteil (115) und einen zweiten Strömungsumschaltteil (125) aufweist, die jeweils eine Kältemittelströmungsrichtung des ersten Kältemittelzirkulationsteils und eine Kältemittelströmungsrichtung des zweiten Kältemittelzirkulationsteils gemäß dem Umschalten zwischen Heizen und Kühlen umschalten,
wobei der Heißwasserzuführungsteil (14) zwischen den Kompressor und den Strömungsumschaltteil auf einem Kältemittelkreislauf des Kältemittelzirkulationsteils, der mit dem Heißwasserzuführungsteil verbunden ist, geschaltet ist, um den Heißwasserversorgungsbetrieb ungeachtet des Umschaltens zwischen dem Heizen und dem Kühlen durchzuführen.

11. Heißwasserversorgungsvorrichtung nach einem der vorhergehenden Ansprüche, die ferner einen Enthitzerwärmetauscher (403) aufweist, in dem das Kältemittel mit einer hohen Temperatur, das von dem ersten Kompressor und/oder dem zweiten Kompressor abgegeben wird, strömt,
wobei der Heißwasserversorgungsbetrieb unter Verwendung von Wasser, das mit dem Kältemittel in dem Enthitzerwärmetauscher Wärme ausgetauscht hat, durchgeführt wird, um Wasser des Heißwasserzuführungsteils zu heizen.

## Revendications

1. Dispositif d'alimentation en eau chaude (1) associé à une pompe à chaleur et qui utilise la pompe à chaleur pour effectuer une opération d'alimentation en eau chaude, le dispositif d'alimentation en eau chaude (1) comprenant :
une pompe à chaleur en cascade (10), qui comprend
une première partie de circulation de réfrigérant (11) qui fait circuler un premier réfrigérant, qui comprend un premier compresseur (111), un échangeur thermique en cascade (102) dans lequel la chaleur est échangée entre le premier réfrigérant et un second réfrigérant, un premier expanseur (113), un premier échangeur thermique réfrigérant-eau (101) configuré de sorte que le premier réfrigérant absorbe ou émette de la chaleur, de façon à former un premier cycle réfrigérant ; et
une seconde partie de circulation de réfrigérant (12) qui fait circuler le second réfrigérant, qui comprend un second compresseur (121), un second échangeur thermique réfrigérant-eau (103) qui utilise le second réfrigérant pour effectuer au moins l'une de l'opération d'alimentation en eau chaude et d'une opération de chauffage/de refroidissement, un second expanseur (123), et l'échangeur thermique en cascade (102), de façon à former un second cycle réfrigérant,
**caractérisé en ce que** le dispositif d'alimentation en eau chaude (1) comprend en outre :
une partie d'alimentation en eau chaude (14) configurée pour effectuer l'opération d'alimentation en eau chaude en utilisant au moins l'un du premier réfrigérant ou du second réfrigérant ;
une partie d'alimentation en eau (16) qui fournit de l'eau au premier échangeur thermique réfrigérant-eau (101) et à la partie d'alimentation en eau chaude (14), la partie d'alimentation en eau comprenant :
un passage d'alimentation en eau (161) configuré pour recevoir de l'eau de la part d'une source d'alimentation en eau ;
un passage de circulation (162) dans lequel circule l'eau qui doit faire l'objet d'un échange thermique avec le réfrigérant dans le premier échangeur thermique réfrigérant-eau (101), le passage de circulation (162) étant relié au premier échangeur thermique réfrigérant-eau (101) ;
un passage d'alimentation côté circulation (164) relié au passage d'alimentation en eau (161) et qui s'étend jusqu'au passage de circulation (162), et configuré pour fournir l'eau qui se trouve dans le passage d'alimentation en eau (161) au passage de circulation (162) ; et
un passage d'évacuation côté circulation (166) relié au passage de circulation (162), et configuré pour évacuer l'eau du passage de circulation (162),
un passage d'alimentation côté alimentation en eau chaude (168) relié au passage d'alimentation en eau, et configuré pour guider l'eau qui provient du passage d'alimentation en eau (161) vers la partie d'alimentation en eau chaude (14) ;
dans lequel l'eau qui circule dans le passage de circulation (162) et l'eau stockée dans la partie d'alimentation en eau chaude (14) sont fournies par la même source d'alimentation en eau, et
dans lequel les réfrigérants qui circulent dans le premier échangeur thermique réfrigérant-eau (101) et le second échangeur thermique réfrigérant-eau (103) font l'objet d'un échange thermique avec l'eau afin d'effectuer en continu l'opération d'alimentation en eau chaude, sans opération de dégel.

2. Dispositif d'alimentation en eau chaude selon la revendication 1, dans lequel la partie d'alimentation en eau chaude (14) comprend :
un réservoir d'alimentation en eau chaude (141) qui stocke l'eau à fournir sous forme d'eau chaude ;
un réchauffeur auxiliaire (143) qui chauffe sélectivement l'eau du réservoir d'alimentation en eau chaude ; et
un passage d'évacuation de l'eau (144) destiné à fournir l'eau du réservoir d'alimentation en eau chaude sous forme d'eau chaude,
dans lequel l'eau stockée dans le réservoir d'alimentation en eau chaude et l'eau qui fait l'objet d'un échange thermique avec le premier réfrigérant dans le premier échangeur thermique réfrigérant-eau (101) sont fournies par la partie d'alimentation en eau (16).

3. Dispositif d'alimentation en eau chaude selon la revendication 1, qui comprend en outre une pompe côté circulation (163) destinée à déplacer de manière forcée l'eau du passage de circulation (162),
dans lequel l'eau du passage de circulation circule lorsqu'une température de l'eau de la partie d'alimentation en eau est égale ou inférieure à une température de référence de gel et d'éclatement de façon à empêcher le gel et l'éclatement de la partie d'alimentation en eau, et
un état de fonctionnement avant que l'eau du passage de circulation circule revient au moment auquel la température de l'eau de la partie d'alimentation en eau est supérieure à la température de référence de gel et d'éclatement.

4. Dispositif d'alimentation en eau chaude selon l'une quelconque des revendications 1 ou 2, qui comprend en outre un passage de circulation destiné à faire circuler l'eau qui circule dans l'échangeur thermique côté source de chaleur, configuré de sorte que l'eau du passage de circulation circule sans fournir ni évacuer l'eau du passage de circulation afin d'économiser l'eau qui circule dans le premier échangeur thermique réfrigérant-eau (101) lorsqu'une température de l'eau du passage de circulation est supérieure à une température de référence de circulation, et
l'eau du passage de circulation soit fournie et évacuée lorsque la température de l'eau du passage de circulation est égale ou inférieure à la température de référence de circulation.

5. Dispositif d'alimentation en eau chaude selon la revendication 4, qui comprend en outre :
une partie de réglage de l'alimentation en eau (165) qui empêche sélectivement l'alimentation en eau dans le passage d'alimentation côté circulation (164);
une partie de réglage de l'évacuation de l'eau (167) qui empêche sélectivement l'évacuation de l'eau par le passage d'évacuation côté circulation (166),
dans lequel la partie de réglage de l'alimentation en eau et la partie de réglage de l'évacuation de l'eau ferment le passage d'alimentation côté circulation et le passage d'évacuation côté circulation lorsque la température de l'eau du passage de circulation est supérieure à la température de référence de circulation, et
la partie de réglage de l'alimentation en eau (165) et la partie de réglage de l'évacuation de l'eau (167) ouvrent le passage d'alimentation côté circulation (164) et le passage d'évacuation côté circulation (166) lorsque la température de l'eau du passage de circulation est égale ou inférieure à la température de référence de circulation.

6. Dispositif d'alimentation en eau chaude selon l'une quelconque des revendications 1 à 5, dans lequel l'eau qui passe par le premier échangeur thermique réfrigérant-eau (101) refroidit au moins l'un du premier réfrigérant et du second réfrigérant.

7. Dispositif d'alimentation en eau chaude selon la revendication 6, qui comprend en outre au moins l'un d'un premier refroidisseur excessif (271) dans lequel l'eau qui passe par le premier échangeur thermique réfrigérant-eau (101) fait l'objet d'un échange thermique avec le premier réfrigérant condensé dans l'un de l'échangeur thermique en cascade et du premier échangeur thermique réfrigérant-eau (101), de façon à refroidir et à condenser le premier réfrigérant ; et
un second refroidisseur excessif (272) dans lequel l'eau qui passe par le premier échangeur thermique réfrigérant-eau (101) fait l'objet d'un échange thermique avec le second réfrigérant condensé dans l'un du second échangeur thermique réfrigérant-eau (103) et de l'échangeur thermique en cascade, de façon à refroidir et à condenser le second réfrigérant.

8. Dispositif d'alimentation en eau chaude selon l'une quelconque des revendications 1 à 7, qui comprend en outre une partie de climatisation chauffage refroidissement (15) qui utilise le premier réfrigérant ou le second réfrigérant pour chauffer l'air intérieur afin d'effectuer une opération de chauffage/ refroidissement en intérieur.

9. Dispositif d'alimentation en eau chaude selon la revendication 8, dans lequel, lorsque l'opération d'alimentation en eau chaude et une opération de chauffage sont effectuées en même temps,
un échangeur thermique de climatisation (151) est installé en amont de l'échangeur thermique en cascade (102) le long d'une direction d'écoulement du premier réfrigérant, afin d'améliorer les performances de chauffage en utilisant un réfrigérant qui possède une température élevée côté évacuation du premier compresseur, et
la partie d'alimentation en eau chaude (14) est reliée au second échangeur thermique réfrigérant-eau (103) afin d'améliorer les performances d'alimentation en eau chaude en utilisant un cycle en cascade.

10. Dispositif d'alimentation en eau chaude selon l'une quelconque des revendications précédentes, qui comprend en outre une première partie de commutateur de débit (115) et une seconde partie de commutateur de débit (125) qui commutent respectivement une direction d'écoulement de réfrigérant de la première partie de circulation de réfrigérant et une direction d'écoulement de réfrigérant de la seconde partie de circulation de réfrigérant selon le passage du chauffage au refroidissement,
dans lequel la partie d'alimentation en eau chaude (14) est reliée entre le compresseur et la partie de commutateur de débit pendant un cycle de réfrigérant de la partie de circulation de réfrigérant reliée à la partie d'alimentation en eau chaude, afin d'effectuer l'opération d'alimentation en eau chaude quel que soit le passage du chauffage au refroidissement, et inversement.

11. Dispositif d'alimentation en eau chaude selon l'une quelconque des revendications précédentes, qui comprend en outre un échangeur thermique à désurchauffeur (403) dans lequel circule le réfrigérant qui possède une température élevée et évacué d'au moins l'un du premier compresseur et du second compresseur,
dans lequel l'opération d'alimentation en eau chaude est effectuée en utilisant l'eau qui a fait l'objet d'un échange thermique avec le réfrigérant dans le l'échangeur thermique à désurchauffeur afin de chauffer l'eau de la partie d'alimentation en eau chaude.
